# EUROPÄISCHE PATENTANMELDUNG

(11) **EP 0 692 808 A1**
(43) Veröffentlichungstag der Anmeldung: **17.01.1996**
(21) Anmeldenummer: 95110800.0
(22) Anmeldetag: 11.07.1995
(51) Int. Cl.: H01J 9/00

(54) **Verfahren und Anlage zum Entsorgen von Bildröhren**

(30) Priorität: 12.07.1994 CH 2226/94
(71) Anmelder: ENVIRO EC AG, CH-6300 Zug (CH)
(72) Erfinder: Alavi, Kamal, CH-6318 Walchwil (CH)
(74) Vertreter: Hotz, Klaus, Dipl.-El.-Ing./ETH Patentanwalt

(57) **Zusammenfassung**

Das Entsorgungsverfahren beruht darauf, dass der Konusteil (2) des Glaskolbens (1) selektiv zertrümmert wird, wobei die Fügelinie zwischen Konusteil (2) und Frontteil (4) als Sollbruchstelle verwendet wird und der Frontteil (zunächst) erhalten bleibt. Der zertrümmerte Konusteil und der Frontteil werden dann getrennt aufgefangen (Fig. 5b, 5c) und vorzerkleinert. Die Scherben wenigstens des Frontteils (4) werden dann aneinander trocken gescheuert, um sie von ihrer Innenbeschichtung zu befreien. Schliesslich können die Glasbestandteile des Konusteils und des Frontteils getrennt weiter zerkleinert werden.

## Beschreibung

Die Erfindung betrifft ein Verfahren zum Entsorgen von Bildröhren, deren Glaskolben einen Konusteil und einen innenbeschichteten Frontteil aufweist. Ferner bezieht sich die Erfindung auf eine Entsorgungsanlage zur Durchführung des Verfahrens.

Ausgediente bzw. defekte Bildröhren (Kathodenstrahlröhren) aus Fernsehgeräten, Personal-Computern usw. fallen in immer grösserer Zahl zur Entsorgung an. Ein unkontrolliertes Zertrümmern und die Endlagerung in Deponien verbietet sich einerseits wegen verschiedener in der Innenbeschichtung insbesondere des Frontteils (Leuchtschicht) enthaltener Giftstoffe, andererseits auch wegen der Gefahr des längerfristigen Auslaugens von Schwermetallen und anderen umweltschädigenden Stoffen aus den Spezialgläsern der gebrochenen Kolben. Wie bekannt, sind die beiden Hauptteile des Kolbens aus unterschiedlichen Glassorten gefertigt: Im allgemeinen enthält das Glas des Konusteils vor allem hohe Blei- und Barium-Anteile, während der Frontteil aus Glas mit hohem Gehalt an Barium und Strontium besteht. Ebenso werden zum dichten Verbinden der beiden Teile miteinander verschiedene Verfahren angewendet; in der Regel werden bei Monochrom-Bildröhren der Konusteil und der Frontteil miteinander verschmolzen, während bei Farbbildröhren die Teile mit einem Spezialkleber ("Fritte") verbunden werden.

Es sind bereits verschiedene Vorschläge zur geordneten Entsorgung solcher Bildröhren bekannt geworden. Dabei ist generell zwischen zwei Hauptgruppen von Verfahren zu unterscheiden:
Im ersten Fall wird der Glaskolben als Ganzes gebrochen, so dass die Bruchstücke der beiden Hauptteile bzw. Glassorten als Gemisch anfallen. Gemäss einem vorschlag dieser Art (DE-A 41 30 531) werden nach einer Vorzerkleinerung die gemischten Bruchstücke insgesamt einer Attritionsmahlung unterworfen, um das Glas von der Beschichtung zu befreien. Hierbei ist nachteilig, dass die beträchtliche Glasmenge des Konusteils im Gemisch mit verarbeitet wird, obwohl dessen Beschichtung (innen und/oder aussen) in der Regel keine umweltschädigenden oder sonstwie störenden Stoffe enthält, also gar nicht entfernt werden müsste. Bei einem anderen Verfahren dieser Art (DE-A 42 42 631) werden die Glaskolben (ggf. mit metallischen und Kunststoff-Bestandteilen) zunächst granuliert. Anschliessend gelangt das Granulat zwecks Ablösung der Glasbeschichtung in einen sogenannten Waschreaktor, wobei die Waschflotte (z.B. Wasser) in grossen Mengen gereinigt und ausserdem das gewaschene Granulat getrocknet werden muss. Ausserdem ist auch dieser Vorschlag insofern unwirtschaftlich, als die Menge des Konusglases zumeist gar nicht gereinigt werden müsste und als "Ballast" mitverarbeitet wird. - Alle Verfahren dieser Gruppe haben natürlich den Nachteil gemeinsam, dass wegen dem anfallenden Glasgemisch eine mögliche sortenreine Weiterverwendung der Spezialgläser als Wertstoffe von vornherein ausgeschlossen ist.

Bei der zweiten Hauptgruppe bekannter Verfahren werden zunächst Frontteil und Konusteil voneinander getrennt, damit sie anschliessend separat gereinigt und gegebenenfalls aufbereitet werden können. Gemäss einem ersten Vorschlag dieser Art (EP-A 0 222 948) werden die Glaskolben in ein Bad aus verdünnter Salpetersäure getaucht, um - unterstützt durch Ultraschall-Einwirkung - die den Frontteil mit dem Konusteil verbindende Fritte aufzulösen. Natürlich ist dieses Verfahren nur bei gekitteten Röhren (in der Regel Farbbildröhren), aber nicht bei verschmolzenen Glaskolben anwendbar, es ist aber auch wegen der Verwendung von ätzender Säure und der erforderlichen Reinigung derselben wie auch der Glasteile wenig attraktiv. Weiter ist es bekannt, die beiden Hauptteile des Glaskolbens mechanisch, insbesondere mittels rotierender Trennscheiben (DE-A 39 01 842, EP-A 0 542 676) voneinander zu separieren. Diese Art der Trennung ist allerdings ziemlich mühsam und zeitraubend und mit einem hohen Verschleiss an teuren Diamantscheiben verbunden. Ferner ist eine Trennung der Kolben-Hauptteile mit Hilfe von am Kolbenumfang anzulegenden, elektrisch beheizten Hitzdrähten vorgeschlagen worden, wobei zuerst die vier Ecken der Kolben angeschliffen werden müssen; auch dieses Verfahren ist recht langwierig. - Weil Bildröhren mit sehr unterschiedlichen Kolbenformaten und mit verschiedenen Höhenlagen der Trennlinie verarbeitet werden müssen, lassen sich alle diese Verfahren kaum oder nur mit grossem apparativem Aufwand automatisieren, d.h. es ist viel mühsame und teure manuelle Arbeit erforderlich.

Der vorliegenden Erfindung liegt die Aufgabe zugrunde, die Entsorgung von Bildröhren verschiedenster Art und Grösse mit einem industriell anwendbaren Verfahren auf rationelle Art durchzuführen. Insbesondere sollen kurze Taktzeiten und ein hoher Automatisierungsgrad erreicht werden, wobei dennoch die Trennung der beiden verschiedenen Glassorten des Kolbens gewahrt bleiben soll.

Das erfindungsgemässe Verfahren, welches diese Aufgabe löst, beruht auf den im Patentanspruch 1 angegebenen kennzeichnenden Schritten. Es wird dabei also insbesondere von der Erkenntnis Gebrauch gemacht, dass entlang der Fügelinie zwischen Konusteil und Frontteil in jedem Fall - unabhängig davon, ob die Teile gekittet oder miteinander verschmolzen sind - eine ausgeprägte Diskontinuität besteht, weil nämlich, abgesehen von den verschiedenen Glassorten, auch die Wandstärken beider Teile stark verschieden sind (der Frontteil ist wesentlich dicker als der Konusteil). Deshalb eignet sich die Fügelinie ausgezeichnet als sogenannte Sollbruchstelle, d.h. der (dünnere) Konusteil lässt sich selektiv zertrümmern, ohne dass gleichzeitig der Frontteil bricht. Die Trennung der Glassorten wird dabei sehr rasch und mit einfachen Mitteln (Schlageinwirkung) erzielt, und das Zertrümmern gelingt gleichermassen bei den verschiedensten Röhrentypen.

Bei der getrennten Weiterverarbeitung der beiden Glassorten wird mindestens die Innenbeschichtung des Frontteils entfernt, indem dessen (scharfkantige) Scherben trocken aneinander gescheuert werden; das pulverförmige, trockene Beschichtungsmaterial kann während diesem Verfahrensschritt leicht pneumatisch abgesaugt werden. Falls notwendig, können selbstverständlich auch die Scherben des Konusteils auf entsprechende Weise gereinigt werden. Der Konusteil weist in der Regel eine Beschichtung aus Graphit und Eisenoxid oder aus Aluminium auf, die im allgemeinen unbedenklich, insbesondere ungiftig ist.

Eine erfindungsgemässe Entsorgungsanlage zur Durchführung des Verfahrens ist durch die Anlageteile nach Patentanspruch 4 gekennzeichnet. Eine solche Anlage kann praktisch vollautomatisch und mit hoher Taktrate betrieben werden - allenfalls abgesehen von einer manuellen Beschickung der die zu entsorgenden Bildröhren aufnehmenden, eingangsseitigen Glastrenneinheit.

In den abhängigen Ansprüchen 2 und 3 sind besondere Varianten des Verfahrens, und im Anspruch 5 eine vorteilhafte Ausgestaltung der Anlage angegeben. Die Ansprüche 6, 7 und 8 beziehen sich auf besondere Ausführungsformen von Glastrenneinheiten als Bestandteil einer erfindungsgemässen Anlage.

Im Folgenden werden Ausführungsbeispiele des Verfahrens und der Anlage gemäss der Erfindung im Zusammenhang mit der Zeichnung näher erläutert.
- Fig. 1: ist ein beispielsweises Materialflussschema einer erfindungsgemässen Anlage zur Erläuterung der Verfahrensschritte;
- Fig. 2: ist das Schaubild einer Gesamtanlage;
- Fig. 3: zeigt, schräg von unten gesehen und schematisch in Perspektive, wesentliche Teile einer Glastrenneinheit gemäss einer ersten Ausführungsform;
- Fig. 4: ist ein teilweiser Schnitt durch die betreffende Glastrenneinheit quer zur Förderrichtung;
- Fig. 5a, 5b und 5c: zeigen aufeinanderfolgende Schritte eines Verarbeitungszyklus einer Bildröhre, wobei die Glastrenneinheit von der Seite gesehen und vereinfacht dargestellt ist;
- Fig. 6: ist die perspektivische Darstellung einer Glastrenneinheit gemäss einer zweiten Ausführungsform;
- Fig. 7: zeigt die Glastrenneinheit nach Fig. 6 im Längsschnitt, und
- Fig. 8: im Querschnitt;
- Fig. 9 bis Fig. 12: sind Detail-Schnitte in einem grösseren Massstab an aufeinanderfolgenden Stellen in Fig. 7 gesehen, zur Veranschaulichung der Betätigung von Kolben-Halteorganen bei der Einheit nach Fig. 6;
- Fig. 13: ist die perspektivische, schematische Darstellung eines Scheueraggregates in der Anlage nach Fig. 2, und
- Fig. 14: zeigt das Scheueraggregat nach Fig. 13 im Querschnitt.

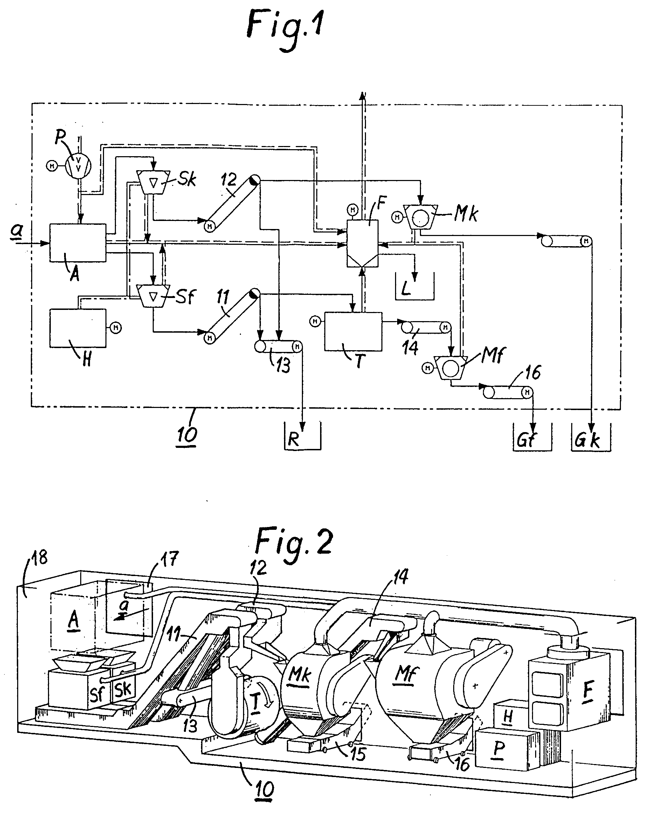

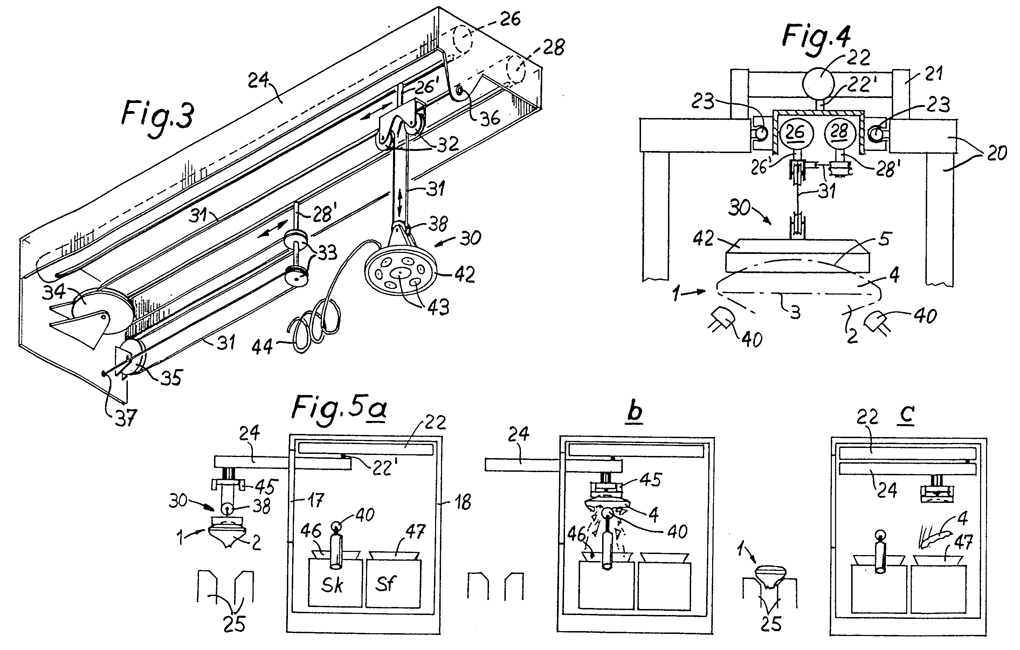

Die schematische Darstellung nach Fig. 1 dient zur Erläuterung des gesamten Verfahrensablaufs und gibt gleichzeitig eine Uebersicht über die Entsorgungsanlage, wie sie in Fig. 2 perspektivisch dargestellt ist. Die Anlage 10 wird an der Stelle a mit den zu verarbeitenden bzw. zu entsorgenden Bildröhren beschickt (in den Fig. 4, 5 und 6 mit 1 bezeichnet). Es handelt sich hierbei um die von den äuseren Bildröhren-Bestandteilen (Ablenkspulen etc.) befreiten Glaskolben, an denen zweckmässigerweise auch der Röhrensockel mit dem Elektrodenteil bereits abgetrennt ist. Die Glaskolben, bestehend aus Konusteil 2 und Frontteil 4, werden in der Anlage 10 zunächst von einer Glastrenneinheit A aufgenommen, in der auf weiter unten beschriebene Weise der Konusteil 2 selektiv, also ohne den Frontteil 4, zertrümmert wird. In Fig. 2 ist die Glastrenneinheit A lediglich als Kubus strichpunktiert angedeutet; zwei verschiedene Varianten einer solchen Einheit werden weiter unten anhand der Fig. 3 bis 5 bzw. 6 bis 12 im einzelnen beschrieben.

Unterhalb der Glastrenneinheit A werden der zertrümmerte Konusteil sowie der Frontteil je durch separate Auffangmittel aufgenommen; vorzugsweise handelt es sich dabei um die Beschickungsöffnungen von zwei nebeneinander angeordneten Aggregaten Sk, Sf zur Vorzerkleinerung des Konusteil- und des Frontteil-Materials. Es handelt sich hierbei um an sich bekannte, hydraulisch betriebene Shredder (Schneidmühlen), in denen das Material zu Scherben von maximal etwa 30 mm vorzerkleinert wird.

Die jedenfalls bei Farbbildröhren im Innern des Glaskolbens vorhandenen Eisenteile, wie Lochmaske und Rahmen, gelangen zusammen mit dem Frontglas und/oder dem Konusglas ebenfalls in die Shredder und werden entsprechend zerkleinert.

Das vorzerkleinerte Material wird von den Shreddern Sk, Sf mittels Schrägförderern 11, 12 getrennt weitertransportiert. Die Kopfwalzen am oberen Ende dieser Förderer enthalten einen an sich bekannten Magnetscheider, und die ausgeschiedenen Metallteile werden mittels Bandförder 13 seitlich wegtransportiert (Auffangbehälter R in Fig. 1).

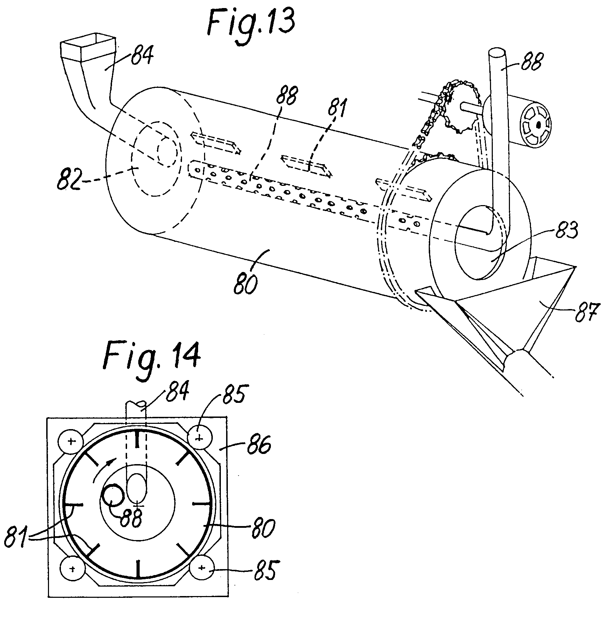

Die Scherben des vorzerkleinerten Frontteils gelangen dann über eine Rutsche in ein Scheueraggregat T, bei dessen Durchlauf die Scherben aneinander trocken gescheuert werden, wobei sie von ihrer Innenbeschichtung befreit werden. Vorzugsweise ist ein solches Scheueraggregat als liegende, rotierende Trommel ausgebildet; ein geeignetes Ausführungsbeispiel wird weiter unten anhand der Fig. 13 und 14 näher beschrieben. Nötigenfalls kann auch das vorzerkleinerte Material des Konusteils in einem ähnlichen Aggregat gescheuert und von der Beschichtung befreit werden, jedoch ist beim vorliegenden Beispiel der Anlage ein solches Aggregat nicht vorgesehen.

Schliesslich werden die Glasbestandteile des Konusteils und des Frontteils getrennt weiter zerkleinert. Hierfür enthält die Anlage 10 ein Granulieraggregat Mk für das Konusglas, welches vom Förderer 12 über eine Rutsche in das genannte Aggregat gelangt, sowie ein Aggregat Mf für das Frontglas, welches Aggregat über einen Schrägförderer 14 ausgehend von dem Scheueraggregat T beschickt wird. Als Aggregate Mk und Mf können an sich bekannte Hammermühlen oder Kugelmühlen verwendet werden. Die darin gebildeten Glasgranulate mit Korngrössen von vorzugsweise 1 bis 2 mm werden mittels Förderbändern 15, 16 aus der Anlage heraustransportiert (Behälter Gf, Gk in Fig. 1).

Als Hilfsaggregate enthält die Anlage 10 eine Hydraulikpumpe H, insbesondere für den Betrieb der Vorzerkleinerungs-Shredder Sk und Sf, sowie einen Kompressor P, vorwiegend für die pneumatische Betätigung verschiedener Organe in der Glastrenneinheit A. Die in den verschiedenen Aggregaten der Anlage anfallenden Stäube, insbesondere auch im Scheueraggregat T, werden abgesaugt und mit der Saugluft in ein Luftfilter F geleitet. Der Filterstaub, welcher ausser Glasstaub vor allem die Leuchtschicht vom Frontteil enthält, wird zur Entsorgung in einem Behälter L gesammelt.

Die gesamte Anlage 10 kann gemäss Fig. 2 zweckmässigerweise als mobile Anlage ausgebildet sein. Vorzugsweise ist sie in einem Strassenfahrzeug oder, wie dargestellt, in einem Anhänger bzw. Sattelauflieger angeordnet. Das Verfahren kann praktisch vollautomatisch ohne manuelle Tätigkeit durchgeführt werden, lediglich bei der Beschickung des Glastrennaggregates A ist allenfalls Bedienungspersonal erforderlich.

Eine Glastrenneinheit A gemäss einem ersten Ausführungsbeispiel wird nun anhand der Fig. 3 bis 5 beschrieben: innerhalb der Wände 18 der Anlage 10 und im Bereich der Beschickungsöffnung 17 ist die Einheit über den beiden Shreddern Sk, Sf in einem starren Gestell 20 (Fig. 4) eingebaut. Oben im Gestell 20 ist zwischen Jochen 21 ein pneumatischer Schiebezylinder 22 montiert. Der Mitnehmer 22' des Zylinders 22 ist mit einem Rahmen 24 verbunden, der an Linearführungen 23 des Gestells 20 läuft. Der Rahmen 24 ist also mit Hilfe des pneumatischen Zylinders 22 horizontal verschiebbar zwischen einer eingefahrenen Stellung (Fig. 5c) und einer durch die Oeffnung 17 hindurch teilweise ausgefahrenen Stellung (Fig. 5a und 5b).

Der Rahmen 24 und die in ihm eingebauten Teile sind vor allem aus der schematischen Darstellung Fig. 3 ersichtlich. Parallel nebeneinander sind zwei pneumatische Schiebezylinder 26 und 28 im Rahmen 24 montiert, mit Mitnehmern 26' bzw. 28', die nebeneinander bezüglich des Rahmens 24 in gleicher Richtung verschiebbar sind wie der Rahmen selbst bezüglich dem Gestell 20. Der Mitnehmer 26' trägt zwei nebeneinander gelagerte Seilrollen 32 und der Mitnehmen 28' zwei übereinander gelagerte Seilrollen 33.

Die Schiebezylinder 26, 28 dienen zum horizontalen Verschieben bzw. zum Heben und Senken eines Gehänges 30, über dessen Seilrolle 38 ein Seil 31 läuft, das wie folgt geführt ist: Die beiden Enden des Seils 31 sind an Stellen 36 bzw. 37 am Rahmen 24 befestigt. Von der Stelle 36 läuft das Seil über die erste Rolle 32 nach unten zum Gehänge 30 und über dessen Rolle 38, dann wieder nach oben und über die zweite Rolle 32. Dann läuft das Seil horizontal über eine erste, hinten am Rahmen 24 gelagerte Umlenkrolle 34, dann zu der oberen Rolle 33 des Mitnehmers 28', wieder nach hinten und über eine zweite am Rahmen 24 gelagerte Umlenkrolle 35, dann über die untere Rolle 33 am Mitnehmer 28' und schliesslich zur zweiten Befestigungsstelle 37. Wie aus der Fig. 3 erkennbar ist, wird somit durch Betätigung des Zylinders 26 das Gehänge 30 am Mitnehmer 26' horizontal verschoben. Anderseits wird durch Betätigung des Zylinders 28 bzw. Verschieben des Mitnehmers 28' mit den Seilrollen 33 das Gehänge 30 am Seil 31 angehoben oder abgesenkt. Das horizontale Verschieben und das Heben oder Senken des Gehänges 30 können auch gleichzeitig durchgeführt werden.

Das Gehänge 30 besteht im wesentlichen aus einem Teller 42, dessen Unterseite mit einer Anzahl Saugnäpfe 43 versehen ist. Diese stehen über einen flexiblen Schlauch 44 und eine pneumatische Steuerung mit einer Saugpumpe in Verbindung, um die Saugnäpfe ein- und auszuschalten. Damit kann am Gehänge 30 jeweils ein Glaskolben 1 mit nach oben gekehrtem Bildschirm 5 (Vorderseite des Frontteils 4) gefasst werden; durch Ausschalten der Saugluft bzw. leichten Ueberdruck wird der Frontteil 4 wieder losgelassen.

Zur Glastrenneinheit A gehören auch Schlagorgane, die auf den Konusteil 2 gerichtet sind, um diesen selektiv zu zertrümmern. Beim vorliegenden Beispiel handelt es sich um zwei gegenüberliegende, mittels pneumatischen Zylindern betätigbare Hämmer 40, die über der Beschickungsöffnung 46 des Shredders Sk montiert sind.

Die Trennung zwischen Frontteil und Konusteil durch selektive Zertrümmerung des Konusteils vollzieht sich gemäss den Fig. 5a, b und c in folgenden Schritten: Nach Fig. 5a ist der Rahmen 24 aus der Beschickungsöffnung 17 teilweise ausgefahren, und das Gehänge 30 am Mitnehmer 26' befindet sich in vorderster Stellung am Rahmen 24 über einer Unterlage 25, auf der die zu verarbeitenden Bildröhren mit nach oben gekehrtem Bildschirm bereitgestellt und positioniert werden. Eine Bildröhre 1 ist an ihrem Frontteil vom abgesenkten Gehänge 30 bzw. dessen Saugnäpfen 43 gefasst worden und wird durch Anheben des Gehänges (Betätigung des Zylinders 28) nach oben befördert bis zu einem Anschlag 45, der am Mitnehmer 26' befestigt ist (in Fig. 3 und 4 nicht dargestellt). Der Anschlag 45 verhindert eine Pendeln beim seitlichen Verschieben des Gehänges 30.

Durch Betätigen des Zylinders 26 wird nun dessen Mitnehmer 26' über eine Förderstrecke seitlich verschoben bis zu einer ersten Stelle innerhalb der Wände 18 nach Fig. 5b, wo sich das Gehänge im Bereich der Hämmer 40 und über der Beschickungsöffnung 46 befindet. Hier wird das Gehänge kurz angehalten und die Hämmer 40 werden betätigt. Indem sie gegen den Konusteil schlagen, wird dieser selektiv bis zur Fügelinie 3 (Fig. 4) zertrümmert, während der Frontteil am Gehänge 30 haften bleibt. Die Scherben des Konusteils fallen in den Shredder Sk.

Im nächsten Schritt wird durch Betätigung des Schiebezylinders 22 der gesamte Wagen 24 eingefahren, um das Gehänge 30 mit dem Frontteil 4 an eine zweite Stelle der Förderstrecke über der Beschickungsöffnung 47 zu bringen (Fig. 5c). Hier wird die Saugluft an den Saugnäpfen 43 ausgeschaltet und der Frontteil 4 fällt in den Shredder Sf. Inzwischen ist der Glaskolben der nächsten Bildröhre 1 auf der Unterlage 25 positioniert worden. Durch gleichzeitiges Betätigen der Zylinder 22 und 26 wird der Mitnehmer 26' mit dem Gehänge 30 wieder in die Position nach 5a ausgefahren, und der nächste Zyklus kann beginnen, indem das Gehänge 30 zur Aufnahme der nächsten Bildröhre abgesenkt wird.

Der gesamte vorstehend beschriebene Zyklus kann selbstverständlich mittels einer Folgesteuerung vollautomatisch in rascher Folge ablaufen. Eine manuelle Bedienung ist allenfalls nur für das Bereitstellen der Bilröhren auf der Unterlage 25 erforderlich.

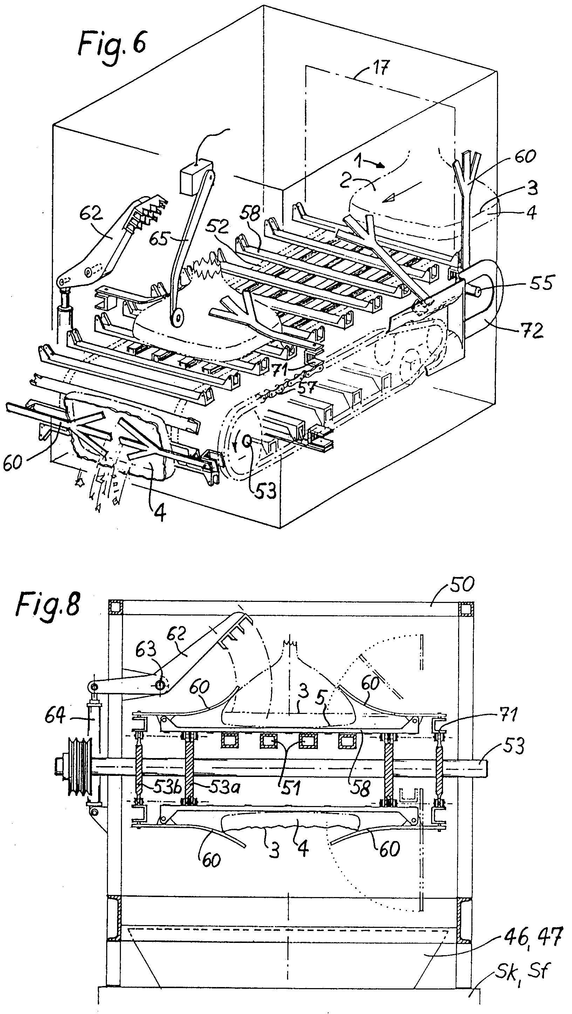

Die in den Fig. 6 bis 12 dargestellte weitere Glastrenneinheit arbeitet nach einer anderen Verfahrensvariante, indem hier die Glaskolben der Bildröhren mit nach unten gekehrtem Bildschirm 5 aufliegend gefasst und über eine Förderstrecke bewegt werden.

An einer ersten Stelle der Förderstrecke wird jeweils der Konusteil 2 zertrümmert, und dessen Bruchstücke weden im schüsselförmigen Frontteil aufgefangen. Sodann wird an einer zweiten Stelle der Förderstrecke der Frontteil umgekippt und die Bruchstücke des Konusteils werden ausgeschüttet. Schliesslich wird an einer dritten Stelle der Förderstrecke der Frontteil losgelassen. Auf diese Weise werden der zertrümmerte Konusteil und der Frontteil an der genannten zweiten bzw. dritten Stelle getrennt aufgefangen und der Vorzerkleinerung zugeführt. In diesem Zusammenhang sei darauf hingewiesen, dass bei dieser zweiten Variante der Glastrenneinheit die Vorzerkleinerungs-Shredder Sf und Sk gegenüber der Darstellung nach Fig. 2 vertauscht angeordnet sein müssen, d.h. der Shredder Sf befindet sich dann näher bei der Beschickungsöffnung 17. Auch bei dieser Verfahrensvariante ist wesentlich, dass die Fügelinie 3 zwischen Frontteil und Konusteil als Sollbruchstelle benutzt und und der Konusteil bis zu dieser Linie selektiv zertrümmert wird.

Die in den Fig. 6 bis 8 dargestellte Glastrenneinheit ist in einem starren, kubischen Rahmen 50 montiert und in der Anlage 10 über den beiden Shreddern Sk, Sf eingebaut. Die Einheit weist ein endloses Ketten-Förderband mit oberem Trum 52 und unterem Trum 54 auf, wobei die Ketten über eine Antriebswelle 53 und eine dazu parallele Achse 55 umlaufen. Der Umlaufsinn ist so, dass das obere Trum sich von der Beschickungsöffnung 17 (Fig. 6) wegbewegt. Unter dem oberen Trum 52 befindet sich ein stationärer Stützrost 51. Auf der Antriebswelle 53 sitzen die beiden Kettenräder 53a für das Förderband, und ausserhalb derselben ist ein Paar weiterer Kettenräder 53b angebracht zum Antrieb von zwei Ketten 57, die parallel zum Förderband umlaufen, jedoch nicht über die Achse 55, sondern über Umlenkräder 56 geführt sind.

Das umlaufende Förderband weist in relativ engen Abständen Querleisten 58 auf, die eine Auflage bilden für die Bildröhren 1, welche nacheinander mit nach unten gekehrtem Bildschirm 5 aufgelegt werden. An den Enden einiger der genannten Leisten 58 sind jeweils paarweise gegenüberliegende, federnde Arme 60 angelenkt. Jeweils ein Paar dieser Arme 60 bilden Halteorgane für die auf dem Förderband befindlichen Glaskolben 1. Auf ihrem Umlauf mit dem Endlos-Förderband wird die Schwenkbewegung der Arme 60 auf weiter unten beschriebene Weise in Abhängigkeit vom Förderweg automatisch gesteuert, um die Glaskolben 1 bzw. deren Frontteil 4 zu halten und später den Frontteil an geeigneter Stelle freizugeben. An bestimmter Stelle zu beiden Seiten des oberen Trums 52 des Förderbandes sind gegenüberliegende Schlagorgane 62 montiert, die auf den Konusteil der vorbeigeführten Glaskolben gerichtet sind (in Fig. 6 und 8 ist nur das Schlaggorgan 62 auf der einen Seite des Förderbandes dargestellt). Beide Schlagorgane sind auf Achsen 63 vertikal schwenkbar gelagert und mittels je einem pneumatischen Zylinder 64 betätigbar. Zur Auslösung der Schlagbewegung im geeigneten Moment kann z.B. ein Tasthebel 65 oder eine andere geeignete Auslöseeinrichtung vorgesehen sein.

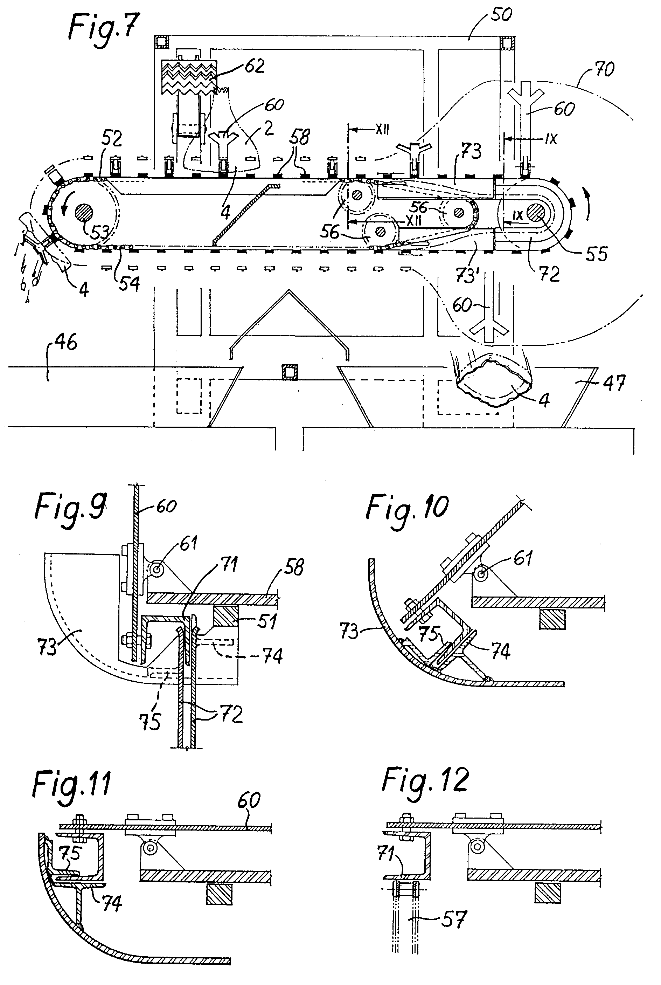

Die automatische Betätigung der Kolben-Halteorgane (federnde Arme) 60 in Abhängigkeit des Förderweges beim Umlauf mit dem Förderband wird nachstehend im wesentlichen anhand der Fig. 9 bis 12 erläutert:
Jeder der Arme 60 ist an demjenigen Ende, das sich ausserhalb der Leiste 58 und der Schwenkachse 61 bewegt, mit einem Mitnehmer 71 versehen. Dieser liegt auf dem Umlaufweg entweder auf der mit umlaufenden Kette 57 auf, welche den Arm 60 parallel zu der Leiste 58 zu halten versucht (Haltestellung), oder er wird von feststehenden Führungsorganen gemäss Fig. 9, 10 und 11 offen gehalten (rechtwinklig zur Leiste 58) bzw. zu einer Schwenkbewegung veranlasst. Der Bereich der offenen Stellung und die Uebergangsbereiche zur Haltestellung sind in Fig. 7 mit der strichpunktierten Linie 70 angedeutet.

In einem Bereich von 180° um die Achse 55 herum und zwei angrenzenden linearen Bereichen läuft der Mitnehmer 71 zwischen zwei festen Führungsblechen 72 (Fig. 9). Von den Führungsblechen 72 wird der Arm 60 senkrecht zur Leiste 58, also offen gehalten. Wenn der Mitnehmer 71 am oberen Trum die Bleche 72 verlässt, gelangt er zwischen Führungsprofile 74 und 75, die in einer Verschalung 73 befestigt sind und zueinander parallel, aber kurvenförmig verlaufen. Die Leisten 74, 75 bilden für den Mitnehmer 71 einen Führungsspalt, der zunächst vertikal (Fig. 9), dann geneigt (Fig. 10) und schliesslich horizontal (Fig. 11) gerichtet ist. Wenn also der Mitnehmer 71 diesen Führungsspalt durchläuft, wird der Arm 60 zwangsläufig aus der Vertikalstellung zunehmend geneigt und schliesslich waagrecht gehalten. In dieser Stellung (Schliessstellung, Fig. 11) verlässt der Mitnehmer 71 den Führungsspalt und geht direkt auf die mit umlaufende Kette 57 über (Fig. 12). Die Schliessstellung bleibt erhalten, solange der Mitnehmer 71 sich auf der Kette 57 befindet, also auch am unteren Trum 54 bis nach dem unteren Ketten-Umlenkrad 56. Anschliessend wird der Mitnehmer 71 wieder von Führungsprofilen analog den Profilen 74 und 75 übernommen, die in einer unteren Verschalung 73' angeordnet sind. Entlang dieser Verschalung wird der Arm 60 aus der Haltestellung in die Oeffnungsstellung geschwenkt, und anschliessend gelangt der Mitnehmer 71 wieder zwischen die Führungsbleche 72. - Entsprechende Führungsorgane 72, 73 und 73' befinden sich selbstverständlich auch auf der gegenüberliegenden Seite des Förderbandes zur Steuerung des jeweils anderen Armes eines Paares.

Die Wirkungsweise der vorstehend beschriebenen Glastrenneinheit ist wie folgt: Die Glaskolben 1 (Fig. 6) werden nacheinander durch die Oeffnung 17 hindurch mit dem Bildschirm 5 nach unten auf das Förderband gelegt. Die Arme 60 sind hier geöffnet, schliessen sich nun jedoch, um die auf dem oberen Trum 52 liegenden Glaskolben am Konusteil 2 festzuhalten. Wenn ein Glaskolben auf seinem Förderweg gegen den Tasthebel 65 stösst, werden die Hämmer 62 schlagartig betätigt und dadurch der Konusteil 2 bis zur Fügelinie 3 zertrümmert. Die Scherben des Konusglases werden vom schüsselförmigen Frontteil 4 aufgefangen. Da die Arme 60 federnd ausgebildet sind, halten sie den Frontteil 4 weiterhin fest. Bei der nachfolgenden Umlenkung des Förderbandes vom oberen zum unteren Trum wird der Frontteil 4 umgekippt; die Bruchstücke des Konusteils werden dabei ausgeschüttet und fallen in die Beschickungsöffnung 46 des Shredders Sk. Der nun leere Frontteil 4 bleibt am unteren Trum 54 gehalten und wird in Richtung zur unteren Führungseinrichtung 73' hin bewegt. Dort öffnen sich die Arme 60 und lassen den Frontteil in die Beschickungsöffnung 47 des Shredders Sf fallen. - Der Abstand der Arm-Paare 60 und die Beschickungskadenz sind so, dass sich normalerweise gleichzeitig mehrere Glaskolben bzw. Frontteile auf dem Förderband befinden.

Anhand der Fig. 13 und 14 wird nun noch ein geeignetes Scheueraggregat für vorzerkleinertes Frontteil-Material beschrieben (gegebenenfalls ist auch für das Material des Konusteils ein solches Aggregat vorgesehen). Die Darstellung des Ausführungsbeispiels in Fig. 13 und 14 ist schematisch und weicht in Einzelheiten von der Darstellung des Aggregates T in Fig. 2 ab.

Hauptbestandteil des Scheueraggregates ist eine liegende Trommel 80, die im Innern mit einer Anzahl etwa radialer Schaufeln 81 versehen ist und relativ langsam um ihre Längsachse rotiert. Stirnseitig weist die Trommel 80 eine Einlassöffnung 82 und eine Auslassöffnung 83 auf. Der vorzerkleinerte Glasbruch gelangt über eine Schütte 84 durch die Einlassöffnung 82 hindurch in die Trommel. Gemäss Fig. 14 kann die Trommel zur Rotation im Bereich der beiden Enden auf Rollen 85 geführt sein, die an Rahmen 86 gelagert sind (in Fig. 13 nicht dargestellt). Zwecks Einstellung einer geeigneten Durchlaufzeit bzw. Verweilzeit des zu scheuernden Materials kann die Auslassöffnung 83 grösser sein als die Einlassöffnung, oder die Trommelachse kann etwas geneigt sein, so dass die Auslassöffnung 83 tiefer liegt; beide Massnahmen können auch kombiniert werden. Von der Auslassöffnung 83 gelangt das austretende, gereinigte Material in einen Auffangtrichter 87, von dem es weitertransportiert wird.

In der langsam rotierenden Trommel 80 wird der Glasbruch, dessen Beschichtung abgescheuert werden soll, von den Schaufeln 81 ein Stück weit angehoben, rutscht dann von den Schaufeln ab und fällt zurück. Es entsteht dabei eine andauernde Umwälzung des Materials, wobei die scharfkantigen Glasscherben aneinander scheuern. Ueber der Stelle im Trommelquerschnitt, wo sich die grösste Materialansammlung befindet und die Umwälzung stattfindet, ist ein gelochtes Saugrohr parallel zur Rohrachse montiert. Ueber das durch die Austrittsöffnung 83 geführte Saugrohr wird das staubförmige, trocken abgescheuerte Beschichtungsmaterial zum Filter F abgeführt. Die Verweilzeit des Materials in der Trommel 80 wird so eingestellt, dass die Glasscherben die Scheuertrommel praktisch sauber verlassen.

## Patentansprüche

1. Verfahren zum Entsorgen von Bildröhren, deren Glaskolben (1) einen Konusteil (2) und einen innenbeschichteten Frontteil (4) aufweist, dadurch **gekennzeichnet**,
- dass der Konusteil (2) bis zu der als Sollbruchstelle benutzten Fügelinie (3) zwischen den beiden Teilen (2, 4) selektiv zertrümmert wird,
- dass der zertrümmerte Konusteil und der Frontteil getrennt aufgefangen und vorzerkleinert werden,
- dass mindestens die Scherben des vorzerkleinerten Frontteils aneinander trocken gescheuert werden, um sie von ihrer Innenbeschichtung zu befreien,
- und dass die Glasbestandteile des Konusteils und des Frontteils getrennt weiter zerkleinert werden.

2. Verfahren nach Anspruch 1, dadurch gekennzeichnet,
- dass der Glaskolben mit nach oben gekehrtem Bildschirm (5) am Frontteil (4) gefasst und über eine Förderstrecke bewegt wird,
- und dass an einer ersten Stelle der Förderstrecke der Konusteil (2) zertrümmert und an einer zweiten Stelle der Förderstrecke der Frontteil (4) losgelassen wird.

3. Verfahren nach Anspruch 1, dadurch gekennzeichnet,
- dass der Glaskolben mit nach unten gekehrtem Bildschirm (5) aufliegend gefasst und über eine Förderstrecke bewegt wird,
- dass an einer ersten Stelle der Förderstrecke der Konusteil (2) zertrümmert und dessen Bruchstücke im Frontteil (4) aufgefangen werden,
- dass an einer zweiten Stelle der Förderstrecke der Frontteil umgekippt und die Bruchstücke des Konusteils ausgeschüttet werden,
- und dass an einer dritten Stelle der Förderstrecke der Frontteil losgelassen wird.

4. Entsorgungsanlage für Bildröhren zur Durchführung des Verfahrens nach Anspruch 1, **gekennzeichnet** durch die folgenden, bezüglich Materialfluss hintereinander angeordneten Anlageteile:
- eine die Glaskolben (1) der Bildröhren aufnehmende Glastrenneinheit (A) zur selektiven Zertrümmerung des Konusteils (2),
- je ein Vorzerkleinerungsaggregat (Sk, Sf) für das Konusteil- und das Frontteil-Material,
- mindestens ein Scheueraggregat (T) für das vorzerkleinerte Frontteil-Material,
- je ein Granulieraggregat (Mk, Mf) für die Glasbestandteile des Konusteils und des Frontteils.

5. Entsorgungsanlage nach Anspruch 4, dadurch gekennzeichnet, dass sie als mobile Anlage ausgebildet, vorzugsweise in einem Strassenfahrzeug oder Fahrzeuganhänger angeordnet ist.

6. Glastrenneinheit (A, Fig. 3 - 5) in einer Entsorgungsanlage nach Anspruch 4, zur Durchführung des Verfahrens nach Anspruch 2, gekennzeichnet durch ein mit Haltemitteln (43) für den Frontteil (4) versehenes, mit Hilfe von Linear-Fördermitteln (22, 26) seitlich über eine Förderstrecke verfahrbares Gehänge (30), an einer ersten Stelle der Förderstrecke angeordnete, auf den Konusteil (2) gerichtete Schlagorgane (40), sowie je unter der genannten ersten Stelle und unter einer zweiten Stelle der Förderstrecke angeordnete Auffangmittel (46, 47) für den zertrümmerten Konusteil bzw. für den Frontteil.

7. Glastrenneinheit nach Anspruch 6, dadurch gekennzeichnet, dass das Gehänge (30) heb- und senkbar ist.

8. Glastrenneinheit (A, Fig. 6 - 12) in einer Entsorgungsanlage nach Anspruch 4, zur Durchführung des Verfahrens nach Anspruch 3, gekennzeichnet durch
- ein zur Aufnahme von Glaskolben (1) bestimmtes Endlos-Förderband mit einem oberen (52) und einem unteren Trum (54),
- mit dem Endlos-Förderband umlaufende, in Abhängigkeit vom Förderweg betätigbare Kolben-Halteorgane (60 ),
- an einer ersten Stelle entlang dem Förderband angeordnete, auf den Konusteil gerichtete Schlagorgane (62),
- unter einer Umlenkstelle des Endlos-Förderbandes angeordnete erste Auffangmittel (46) für den zertrümmerten Konusteil,
- und unter dem unteren Trum (54) angeordnete zweite Auffangmittel (47) für den Frontteil.
